# EUROPÄISCHE PATENTSCHRIFT

(11) **EP 0 492 216 B1**
(45) Veröffentlichungstag und Bekanntmachung des Hinweises auf die Patenterteilung: **11.10.1995**
(21) Anmeldenummer: 91120958.3
(22) Anmeldetag: 06.12.1991
(51) Int. Cl.: G02F 1/01

(54) **Optisch nichtlineare Polymerschichten**
Non-linear optical polymeric layers
Couches polymériques pour l'optique non-linéaire

(30) Priorität: 21.12.1990 CH 4101/90
(43) Veröffentlichungstag der Anmeldung: 01.07.1992
(73) Patentinhaber: F. HOFFMANN-LA ROCHE AG, 4002 Basel (CH)
(72) Erfinder: Herr, Rolf-Peter, W-7800 Freiburg (DE); Schadt, Martin, CH-4411 Seltisberg (CH); Schmitt, Klaus, W-7850 Lärrach (DE)
(74) Vertreter: Buntz, Gerhard

(56) Entgegenhaltungen:
- EP-A- 0 358 476
- MOLECULAR CRYSTALS AND LIQUID CRYSTALS. Bd. 189, Oktober 1990, CHUR CH Seiten 3 - 38; D.R.ULRICH: 'POLYMERS FOR NONLINEAR OPTICAL APPLICATIONS'

## Beschreibung

Die Erfindung betrifft Polymerschichten mit optisch nichtlinearen oder anisotropen Eigenschaften in selektiv flächig begrenzten und beliebig geformten Bereichen, die gegenüber anderen Bereichen der Schicht mit zentrosymmetrischer oder isotroper Struktur oder mit anderen optisch nichtlinearen oder anisotropen Eigenschaften abgegrenzt sind. Die Erfindung betrifft ferner Verfahren zur Herstellung derartiger Schichten, sowie ihre Verwendung als optische Bauelemente.

Es ist bekannt, dass organische und polymere Materialien mit grossen delokalisierten π-Elektronsystemen nichtlinear optische Koeffizienten aufweisen können, die grösser sind als in anorganischen Materialien.

Ferner lassen sich die Eigenschaften organischer und polymerer Materialien leicht variieren, so dass wünschenswerte sekundäre Eigenschaften, wie mechanische und chemische Stabilität, optische Absorption etc. eingestellt werden können, ohne die Nichtlinearität negativ zu beeinflussen.

Dünne Filme aus organischen oder polymeren Materialien mit grosser Nichtlinearität zweiter Ordnung haben ein grosses Anwendungspotential im Bereich der optischen Kommunikation, Lasertechnik, Elektrooptik usw.

Von besonderer Bedeutung ist, dass die Ursache für die Nichtlinearität dieser Materialien auf der Polarisierbarkeit des π-Elektronsystems beruht und nicht auf der Verschiebung oder Umorientierung von Atomen oder Molekülen. Daher lassen sich mit diesen Materialien Bauelemente mit ultrakurzen Responsezeiten realisieren.

Das genannte Gebiet ist seit Jahren Thema intensiver Forschung und ist beispielsweise in den folgenden Publikationen dokumentiert:
ACS Symposium Series 233, Washington D.C. 1983
Proceedings of SPIE Vol. 682 1986 Molecular and Polymeric Optoelectronic Materials: Fundamentels and Applications
Proceedings of SPIE Vol. 824 1987 Advances in Nonlinear Polymers and Inorganic Crystals, Liquid Crystals, and Laser Media
Proceedings of SPIE Vol. 1105 1989 Materials for Optical Switches, Isolators, and Limiters
Proceedings of SPIE Vol. 1147 1989 Nonlinear Optical Properties of Organic Materials 2
NATO ASI Series E: Applied Sciences Vol. 162 1989 Nonlinear Optical Effects in Organic Polymers
Springer Proceedings in Physics 36 1989 Nonlinear Optics of Organics and Semiconductors
Von besonderer Bedeutung für diese Anwendungen sind Seitenkettenpolymere und flüssigkristalline Seitenkettenpolymere, die mit nlo-Chromophoren dotiert sind oder nlo Moleküle als Seitenketten aufweisen. Für den Zweck der vorliegenden Beschreibung werden unter Seitenkettenpolymeren auch Copolymere und Monopolymere verstanden. Es ist bekannt, dass geeignet gewählte Vertreter dieser Materialklasse durch Erwärmen über die Glastemperatur im hohen elektrischen Feld dipolar orientierbar sind und diese nichtzentrosymmetrische Ordnung durch Abkühlen im elektrischen Feld unter die Glastemperatur Tg beibehalten. Solche eingefrorenen gepolten Gläser stellen nlo-Materialien mit grosser χ⁽²⁾-Suszeptibilität dar. (K.D. Singer et al. Appl. Phys. Lett. 49, 1986)

Ein wesentliches Hindernis für die technische Nutzung dieser Materialien ist die ungenügende Langzeitstabilität der dipolaren Ordnung. Es zeigt sich, dass auch unterhalb der Glastemperatur des Polymersystems Relaxation auftritt, die die aufgeprägte nichtzentrosymmetrische Struktur zerstört.

Es gibt verschiedene Strategien, durch Modifikation des Polymers die Stabilität der dipolaren Ordnung zu erhöhen. Da sich die Relaxationsprozesse mit dem Abstand von der Glastemperatur verlangsamen, besteht ein Weg darin, Polymere mit möglichst hoher Glastemperatur zu wählen. Ein anderer Weg besteht darin, Polymernetzwerke anstelle von linearen Polymeren zu verwenden.

Wesentlich bessere langzeit- und temperaturstabile nlo-Polymere wurden durch die Verwendung von nlo-Chromophoren mit mehreren (2 - 4) reaktiven Substituenten erreicht, die als Vernetzer eines Epoxidsystems fungieren (M. Eich J. Appl. Phys. 66, 3241, 1989). In diesen Epoxiden findet die Vernetzungsreaktion unter dem Einfluss eines elektrischen Feldes statt und führt zu einem partiell dipolar orientierten Netzwerk, das nach Abschalten des Feldes erhalten bleibt, da die dipolare Ordnung chemisch fixiert ist.

Für die technische Verwendung nlo-aktiver Polymernetzwerke in komplexen Bauelementen ist ihre einfache und präzise Strukturierbarkeit von fundamentaler Bedeutung. Da bei den bisher bekannten Verfahren die Vernetzung thermisch ausgelöst wird,erfasst sie die ganze Schicht und kann somit nicht auf gewünschte Teilbereiche beschränkt werden.

Strukturierung ist nur möglich durch Aufbringen strukturierter Polungselektroden. Damit ist aber eine Reihe von Nachteilen verbunden. Durch unvermeidlich auftretende elektrische Streufelder an den Rändern der Elektroden werden die Grenzen der gepolten Bereiche unscharf. Dies ist für viele Anwendungen, z.B.Streifenwellenleiter, periodische Strukturen aus gepolten und ungepolten Bereichen, nicht akzeptabel. Ausserdem müssen für die meisten Anwendungen die Elektrodenschichten in weiteren Prozesschritten wieder mühsam entfernt werden.

Der Erfindung liegt die Aufgabe zugrunde, die beschriebenen Nachteile zu beheben. Insbesondere ist das Ziel der Erfindung die Herstellung von stabilen χ⁽²⁾-aktiven Polymerschichten, die komplexe geometrische Strukturen aufweisen können. Ein weiteres Ziel der Erfindung ist die Herstellung von stabilen flüssigkristalline Polymerschichten mit komplexen geometrischen Strukturen aus Bereichen unterschiedlicher Anisotropie, ggf. kombiniert mit isotropen Bereichen.

Erfindungsgemäss wird dies dadurch erreicht, dass das eingangs erwähnte Polymermaterial optisch nichtlineare bzw. mesogene Seitenketten aufweist, die flächenselektiv durch Lichteinwirkung vernetzt sind, wobei die Seitenketten in den Bereichen mit optisch nichtlinearen oder anisotropen Eigenschaften während der Vernetzung unter dem Einfluss eines elektrischen Gleichfeldes orientiert sind.

Nach einem weiteren Aspekt der Erfindung zeichnet sich die Polymerschicht dadurch aus, dass der Uebergang zwischen den optisch unterschiedlichen Bereichen auf weniger als 10 µm, vorzugsweise aufweniger als 1 µm begrenzt ist.

Die erfindungsgemässe Herstellung solcher Schichten zeichnet sich durch die folgenden Schritte aus: Aufbringen einer Schicht aus einem Polymermaterial mit photovernetzbaren Seitenketten auf einen Träger, Anlegen eines elektrischen Feldes, Bestrahlung der zu vernetzenden Bereiche der Schicht mit Licht der die Vernetzung bewirkenden Wellenlänge.

Das erfindungsgemässe Verfahren beruht also darauf, durch photoinitiierte Vernetzung geeigneter Copolymere unter dem Einfluss eines hohen elektrischen Gleichfeldes thermisch und zeitlich stabile nlo-Filme zu erzeugen.

Dabei sind Polung und Vernetzung unabhängig. Polung findet statt, wo das elektrische Feld wirkt; Vernetzung dort, wo bestrahlt wird. Die gepolten unvernetzten (= unbestrahlten) Bereiche verlieren nach Abschalten des elektrischen Feldes die dipolare Orientierung, die vernetzten (= bestrahlten) gepolten Bereiche behalten sie. Vernetzte, nicht gepolte Bereiche bleiben χ⁽²⁾-inaktiv, auch wenn das elektrische Feld wirksam wird.

Vernetzte gepolte Bereiche behalten ihre dipolare Orientierung auch wenn ein elektrisches Feld in Gegenrichtung angelegt wird.

Diese Filme können also photolithographisch selektiv χ⁽²⁾-aktiviert werden.

Dies erlaubt, auf einfache Weise komplexe optische Bauelemente herzustellen, z.B. Streifenwellenleiter, frequenzverdoppelnde Wellenleiter (quasi phasematching), opt. Korrelatoren, Zweistrahlinterferometer, Modulatoren, EO-Schalter.

Im Prinzip lässt sich die Präparationstemperatur frei wählen, da die Photoinitiierung temperaturunabhängig ist (im Gegensatz zu thermischer Initiierung). Dies ist wichtig im Hinblick auf die Verwendung temperaturempfindlicher nlo-Chromophore, die Erhöhung des Ordnungsgrades durch Absenken der Temperatur, die Reduzierung der Ionenleitfähigkeit durch Temperaturerniedrigung und die Einstellung der Viskosität.

Die fixierten nlo-aktiven Bereiche werden durch Bestrahlung definiert. Es sind keine strukturbestimmenden Elektroden erforderlich.

Es lassen sich verschiedene Bereiche eines Filmes nacheinander vernetzen. Dies erlaubt grosse Freiheiten beim Aufbau komplexer Bauelemente.

Es lassen sich vernetzte und unvernetzte Bereiche selektiv herstellen; die unvernetzten Bereiche lassen sich durch Lösungsmittel entfernen und durch andere Materialien ersetzen, ohne den vernetzten Bereich zu stören. (Streifenwellenleiter, Cladding)

Durch Zugabe geringer Mengen von Inhibitormolekülen lassen sich scharfe Grenzen zwischen vernetzten und unvernetzten Bereichen herstellen. Initiatorradikale, die in den unbestrahlten Bereich diffundieren, werden durch den Inhibitor desaktiviert.

Eine Erweiterung der präparativen und anwendungstechnischen Möglichkeiten ist gegeben durch Verwendung flüssigkristalliner Seitenkettenpolymere mit photovernetzbaren Seitenketten.

Diese besitzen oberhalb T_{c} dieselben Eigenschaften wie die bereits beschriebenen amorphen Polymere. Zusätzlich aber sind sie unterhalb T_{c}, z.B. in der nematischen Phase anisotrop. Es ist bekannt, dass flüssigkristalline Polymere in der nematischen Phase (z.B. durch elektrische Felder) hochgradig axial orientierbar sind. Diese Orientierung kann wie beschrieben photolithografisch selektiv fixiert werden. Durch Temperaturerhöhung über T_{c} wird der unvernetzte Teil der Schicht in den isotropen Zustand überführt und kann dort wie die beschriebenen amorphen Polymere behandelt werden, wobei der bereits im ersten Schritt vernetzte Bereich anisotrop bleibt.

Materialien, die sowohl linear optisch als auch nichtlinear optisch modulierbar sind, haben ein grosses Anwendungspotential in der integrierten Optik.

Insbesondere ist denkbar, das Ein- und Auskoppelgitter für einen nlo-Wellenleiter in das nlo-Material optisch einzuschreiben.

Neben den bisher beschriebenen amorphen Copolymeren mit nlo-aktiven und inaktiven Seitenketten, sowie den flüssigkristallinen Copolymeren lässt sich dasselbe Struktur- und Verarbeitungsprinzip auch auf Homopolymere, Oligomere und Monomere mit mehreren vernetzbaren Armen anwenden.

Die Aufgabe der nicht nlo-aktiven Comonomere besteht darin, sekundäre Eigenschaften des Materials zu beeinflussen, wie z.B. optische Dichte, Brechungsindex, Härte, Sprödigkeit, Schrumpf beim Vernetzen, Glastemperatur, Viskosität, etc.

Im folgenden werden unter Bezugnahme auf die beiliegenden Zeichnungen Ausführungsbeispiele der Erfindung beschrieben.

Es zeigen
Fig. 1 eine Prinzipdarstellung der flächenselektiven Vernetzung
Fig. 2 eine schematische Darstellung einer Vorrichtung zur Herstellung einer optisch nichtlinearen Schicht zwischen mit Elektroden beschichteten Glasplatten
Fig. 3 eine schematische Darstellung einer Apparatur zur Herstellung einer optisch nichtlinearen Schicht auf einem leitend beschichteten Substrat
Fig. 4 eine schematische Darstellung eines Wellenleiterelements

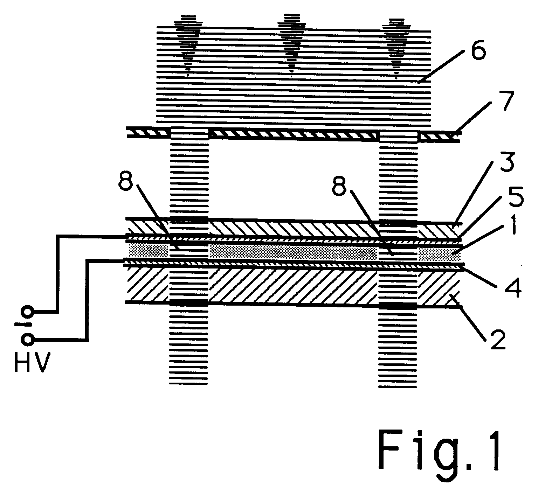

Fig. 1 zeigt das Prinzip der flächenselektiven bzw. strukturierten Vernetzung eines dipolar orientierten Polymermaterials. Das Material befindet sich als Polymerschicht 1 zwischen einer unteren Glasplatte 2, deren obere Fläche mit einer ITO-Beschichtung 4 versehen ist, und einer im Abstand von ca. 1-10µm parallel zur Platte 2 angeordneten Glasplatte 3, die auf ihrer Unterseite ebenfalls eine ITO-Schicht 5 aufweist. Die Anordnung aus den beiden ITO-beschichteten Glasplatten wird im folgenden als Zelle bezeichnet.

Die ITO-Schichten sind mit einer Hochspannungsquelle HV verbunden. Wenn die Gleichspannung anliegt wird im noch unvernetzten Polymermaterial eine dipolare Orientierung induziert.

Die Zelle wird einem Parallellichtstrahl 6 im UV ausgesetzt, der mittels einer Maske 7 auf die Flächenbereiche 8 begrenzt ist, die vernetzt werden sollen. Wenn nach der erfolgten Vernetzung die Hochspannung ausgeschaltet wird, bleibt nur in den vernetzten Bereichen die dipolare Orientierung erhalten. In den übrigen Bereichen kann das nichtvernetzte Material mit einem geeigneten Lösungsmittel entfernt werden. Alternativ kann das Material nach Entfernen der Maske 7 und ohne angelegte Spannung ebenfalls vernetzt werden, so dass dort eine fixierte zentrosymmetrische Struktur entsteht.

Falls das Polymermaterial 1 flüssigkristallin ist, wird es nach bekannten Verfahren im elektrischen Feld durch Anlegen einer Spannung an die Elektroden 4, 5 axial orientiert. Je nach der Spannung und der dielektrischen Anisotropie des Materials kann beispielsweise zunächst eine homöotrope Struktur im flüssigkristallinen Polymermaterial erzeugt und diese mit Hilfe der Maske 7 flächenselektiv vernetzt werden. Anschliessend kann beispielsweise wiederum die Polymerschicht in den nicht vernetzten Bereichen entfernt werden. Alternativ kann die Vernetzung der restlichen Bereiche mit einer anderen, beispielsweise planaren Struktur, erfolgen.

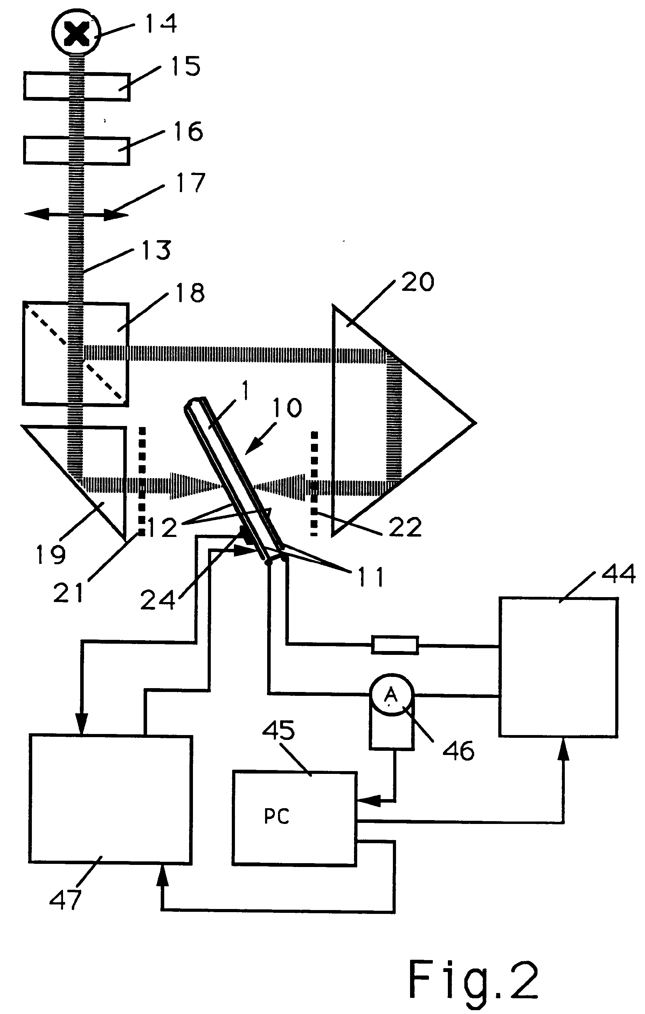

Das in Fig. 1 gezeigte Prinzip lässt sich mit der in Fig. 2 gezeigten Vorrichtung ausführen.

Das zur Herstellung einer flächig strukturierten optisch nichtlinearen Polymerschicht vorgesehene Material 1 befindet sich in einer Zelle 10 ähnlich der gemäss Fig. 1. Die Zelle besteht aus elektrodenbeschichteten Glasplatten 11, die zusätzlich mit einer äusseren Heizbeschichtung 12 versehen sind.

Die Zelle 10 befindet sich in einem optischen System, das ihre Bestrahlung mit UV-Licht 13 von zwei Seiten ermöglicht. Das Licht gelangt von einer UV-Lampe 14 über ein Wärmeschutzfilter 15, ein UG1-Filter 16 und eine Linse oder Optik 17 zu einem Strahlteiler 18. Letzterer teilt den Strahl 13 in zwei gleichstarke Teilstrahlen auf, um gleich intensive Bestrahlung der Zelle von beiden Seiten zu erhalten.

Der durchgehende Strahl gelangt zu einem Prisma 19 und wird von diesem durch eine Maske 21 zur Zelle 10 reflektiert. Der vom Strahlteiler 18 abgelenkte Strahl gelangt zu einem Prisma 20, von dem er durch zweifache Reflexion durch eine Maske 22 auf die gegenüberliegende Seite der Zelle 10 gelangt.

Die Elektrodenplatten 11 sind mit einem Hochspannungsgenerator 44 verbunden, der von einem Rechner 45 gesteuert ist. Der sehr kleine Strom durch die Zelle wird mit einem Pico-Amperometer 46 gemessen. Die registrierte Stromstärke ist der Regelparameter für die Steuerung der Hochspannung. Die an der Polymerschicht anliegende Spannung wird so gewählt, dass der resultierende Strom einen vorgewählten Wert nicht übersteigt.

Die Heizschichten 12 der Zelle sind mit einer Temperaturkontrolleinrichtung 47 verbunden. An der Zelle befindet sich ein Temperaturfühler 24 der den Istwert der Temperatur liefert. Der Sollwert für die Temperatursteuerung wird ebenfalls vom Rechner 45 geliefert.

Das Vorgehen zur Herstellung einer optisch nichtlinearen Schicht ist wie folgt.

Polymermaterial mit photovernetzbaren Seitenketten, von denen ein Teil nlo-Gruppen aufweist, wird mit einer kleinen Menge (Konzentration 5%) Photoinitiator vermischt (z.B. durch Lösen in einem gemeinsamen Lösungsmittel und anschliessenden Abdampfen des Lösungsmittels). Anschliessend wird das getrocknete Material oberhalb der Glastemperatur Tg zwischen mit transparenten Elektroden beschichteten Glasplatten gepresst, wobei Abstandshalter die Schichtdicke definieren. Alternativ kann das Material auch in vorgefertigte Zellen gesaugtwerden.

Die Temperatur der Schicht wird soweit gesenkt, dass ein hohes elektrisches Feld (1MV/cm) zwischen den Elektroden angelegt werden kann, ohne dass hohe Ionenströme die Probe zerstören. Das Polungsfeld bewirkt die dipolare Ausrichtung der mit einem permanenten Dipolmoment behafteten nlo-Gruppen und damit die Aufhebung der Zentrosymmetrie des ursprünglich isotropen Materials.

Gleichzeitig wird die Schicht mit Licht geeigneter Wellenlänge bestrahlt und damit die Vernetzungsreaktion ausgelöst. Unter dem Einfluss des elektrischen Feldes führt die Vernetzung zu einem nichtzentrosymmetrischen Netzwerk. Dies ist durch Messen der SHG unmittelbar beobachtbar.

Die Vernetzungsreaktion führt zur kontinuierlichen Erhöhung der Glastemperatur und damit des elektrischen Widerstandes, so dass eine höhere Spannung zulässig ist. Die maximale verwendete Spannung hängt von der Durchschlagfestigkeit des Polymermaterials ab und ist ebenfalls vorwählbar. Sobald diese Maximalspannung erreicht ist, wird die Zellentemperatur erhöht und damit der steigenden Glastemperatur des Polymers nachgefahren. Durch das kontinuierliche Erhöhen der Reaktionstemperatur bleibt das Polymermaterial hinreichend beweglich, so dass die Vernetzungsreaktion bis zu hohem Vernetzungsgrad vorangetrieben werden kann.

Nach dem Erreichen einer ausreichend hohen Temperatur ist die Vernetzung soweit fortgeschritten, dass ein stabiles nichtzentrosymmetrisches Netzwerk entstanden ist, welches beim Abschalten des elektrischen Feldes erhalten bleibt.

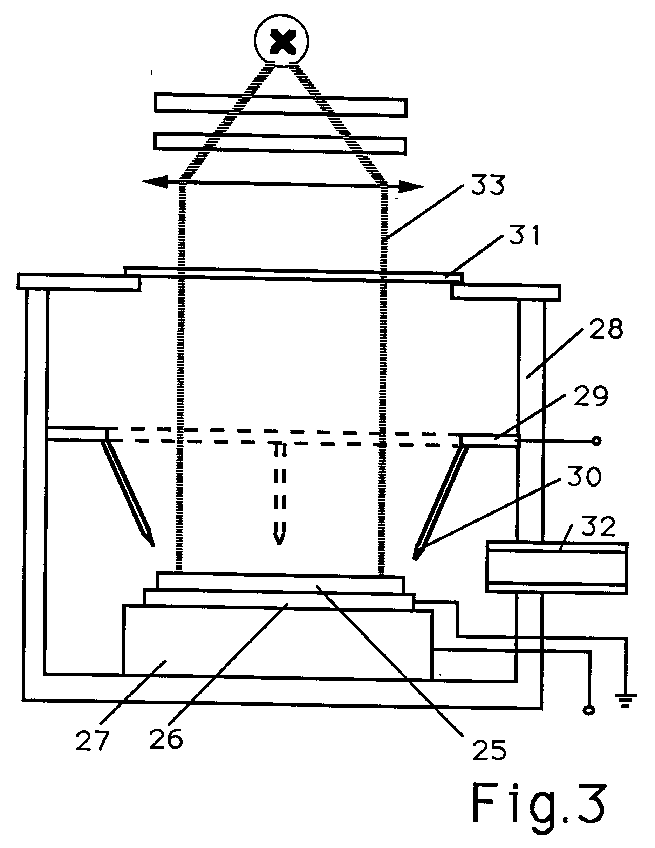

Mit der in Fig. 3 gezeigten Apparatur wird eine optisch nichtlineare Schicht 25 wie folgt auf einem mit einer Elektrodenschicht versehenen Substrat 26 hergestellt.

Polymermaterial mit photovernetzbaren Seitenketten, von denen ein Teil nlo Gruppen mit permanentem Dipolmoment aufweist, wird mit einer kleinen Menge Photoinitiator in einem geeigneten Lösungsmittel gelöst. Die Konzentration der Lösung wird so eingestellt, dass ihre Viskosität für das sog. Spin Coating geeignet ist. Die Lösung wird in einer Spin-Coating-Apparatur auf einem mit einer Elektrode beschichteten Träger 26 geschleudert, so dass homogene Schichten von 0.5 - 5 µm Dicke entstehen. Anschliessend wird der Film auf einer Wärmebank getrocknet und vorzugsweise zur Reduzierung des freien Volumens getempert.

In der in Fig. 3 gezeigten sog. Corona-Poling-Apparatur wird die Polymerschicht auf einer Kühl/Heizplatte 27 in Inertgasatmosphäre gepolt. Der sog. Corona-Poling-Apparat ist an sichbekannt. Er besteht aus einem Gehäuse 28, in dessen Innerem der Heiztisch 27 angeordnet ist, auf dem das mit der Polymerschicht 25 versehene Substrat 26 plaziert wird. Oberhalb des Heiztisches ist eine umlaufende Hochspannungseinrichtung 29 angeordnet, die mit nach unten weisenden Spitzen 30 versehen ist, die eine hohe elektrische Feldstärke im Bereich der darunter angeordneten Polymerschicht 25 erzeugen.

Das Gehäuse ist miteinem Fenster 31 abgedeckt und miteiner Zuführung 32 für Inertgas versehen. Die Apparatur wird mit Inertgas (N₂,Ar) geflutet, um den die radikalische Vernetzung inhibierenden Sauerstoff fernzuhalten. Durch das Fenster wird die Schicht mit UV-Licht 33 geeigneter Wellenlänge bestrahlt, wodurch die Vernetzung ausgelöst wird. Im Feld der Coronarenladung werden die Chromophore dipolar orientiert, so dass ein permanentes nichtzentrosymmetrisches Netzwerk entsteht. Während der Reaktion wird die Temperatur der steigenden Glastemperatur Tg der Schicht nachgeführt. Nach Abschluss der Vernetzungsreaktion ist die dipolar orientierte Schicht fixiert.

Durch verkleinertes Abbilden beliebig strukturierter Blenden lassen sich feine Strukturen auf die Polymerschicht übertragen. Dabei sind die belichteten und unbelichteten Bereiche scharf voneinander getrennt. Durch Zugabe geringer Inhibitorkonzentration lässt sich verhindern, dass die Diffusion des Photoinitiators in abgeschatteten Bereichen Vernetzung auslöst.

Neben Verwendung von Blenden sind holografische Verfahren möglich.

Wie z.T. bereits erwähnt, sind in den erfindungsgemässen Polymerschichten unterschiedliche Kombinationen möglich. Es können vernetzte gepolte Bereiche und unvernetzte gepolte Bereiche kombiniert und auf diese Weise Streifenwellenleitern hergestellt werden. Im vernetzten Bereich ist das Material unlöslich, im unvernetzten Bereich löslich. Durch Lösungsmittel kann das unvernetzte Material entfernt werden. Die freien Bereiche werden im nächsten Arbeitsgang mit anderem Polymermaterial bedeckt (Pufferschichten, Cladding)

Andererseits ist die Kombination aus vernetzten gepolten Bereichen und vernetzten ungepolten Bereichen möglich, z.B. zur Herstellung von frequenzverdoppelnden Wellenleitern. Im ersten Arbeitsgang werden im elektrischen Feld mit einer Gitterblende im Strahlengang Streifen von der Breite der Kohärenzlänge vernetzt, die von unvernetzten Streifen gleicher Breite getrennt sind. Nach Abschalten des elektrischen Feldes relaxieren die unvernetzten Streifen in den isotropen (nicht χ⁽²⁾-aktiven) Zustand.

Im zweiten Arbeitsgang wird die Blende entfernt und damit die gesamte Probe vernetzt. Es entsteht ein Film der periodisch aus χ⁽²⁾-aktiven und inaktiven Bereichen besteht, deren Breite gerade die Kohärenzlänge ist. Der Brechungsindex der gepolten und ungepolten Bereiche ist nahezu identisch. Licht, das in diesem Wellenleiter propagiert, erfährt nur geringe Reflexion an den Grenzschichten (Effizienter frequenzverdoppelnder Wellenleiter durch Realisierung der quasi-phasematching Bedingung).

Eine weitere Kombination besteht aus vernetzten gepolten Bereichen und vernetzten entgegengesetzt gepolten Bereichen. Diese Kombination ist ähnlich wie die soeben beschriebene, aber im zweiten Arbeitsgang wird die Probe im entgegengesetzt gepolten Feld orientiert. Dabei bleiben die im ersten Arbeitsgang vernetzten Streifen unbeeinflusst. Es entstehen periodische Streifensysteme mit entgegengesetzt gerichteter dipolarer Orientierung. Alle Streifen sind χ⁽²⁾-aktiv. Die Streifenbreite (=Kohärenzlänge) ist so gewählt, dass die erzeugte 2. Harmonische über die gesamte Probenlänge phasengerecht verstärkt wird (quasi phase-matching). Der Brechungsindex benachbarter Streifen ist gleich.

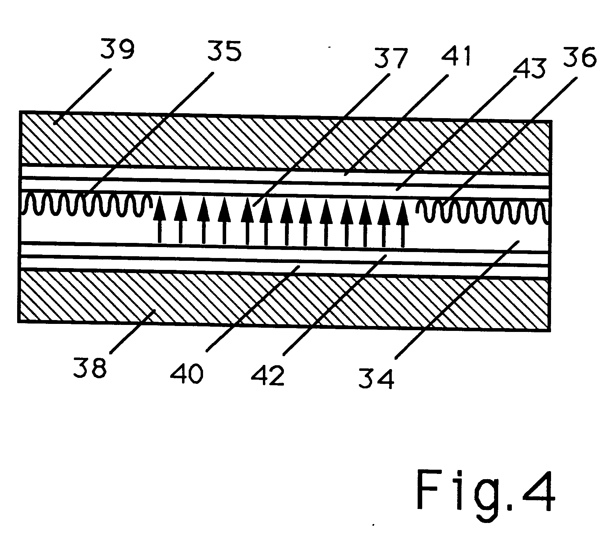

Das in Fig. 4 gezeigte Wellenleiterelement verwendet die anisotropen und die nlo-Eigenschaften einer flüssigkristallinen nlo-Polymerschicht 34. Das Wellenleiterelement besteht aus einem Paar paralleler beabstandeter Glasplatten 38 und 39, die mit ITO-Elektroden 40 und 41 beschichtet sind. Sie weisen ausserdem Pufferschichten 42, 43 auf. Dazwischen ist die flüssigkristalline Polymerschicht 34 enthalten. Die Pufferschichten haben einen Brechungsindex, der niedriger ist als der des Polymers. Ueber ein gemäss dem nachfolgend beschriebenen Verfahren in das Polymer optisch eingeschriebenes Phasengitter 35,36 wird Licht in den Wellenleiter eingekoppelt. Das eingekoppelte Licht durchläuft im mittleren Teil 37 des Elements eine durch Polen und Vernetzen erzeugte χ⁽²⁾-aktive Zone, in der der χ⁽²⁾-Prozess (SHG oder Pockelseffekt etc.) stattfindet.

Zur Herstellung erfolgen die folgenden Prozessschritte. Das flüssigkristalline Material in der Mesophase mit Δε>0 wird im elektrischen Wechselfeld homöotrop orientiert. In den Bereichen 35 und 36 wird das photovernetzbare Material derart mit UV-Licht bestrahlt, dass ein Streifenmuster geeigneter Periodizität entsteht (z.B. durch Zweistrahlinterferenz). Im Bereich der belichteten Streifen findet Vernetzung statt.

Anschliessend wird die Polymerschicht auf eine Temperatur > T_{c} erwärmt, so dass sie mit Ausnahme der bereits vernetzten homöotropen Streifen isotrop wird. Die Bereiche 35 und 36 werden durch eine Maske gleichförmig mit UV-Licht bestrahlt, so dass die im gesamten Bereich 35 und 36 stattfindende Vernetzung hier den isotropen Zustand fixiert. Als Ergebnis erhält man homöotrop orientierte Streifen in einer isotropen Matrix.

Der noch unvernetzte Bereich 37 wird jetzt einem hohen elektrischen Gleichfeld ausgesetzt. Dadurch werden die Seitenketten des Polymers im Bereich 37 dipolar orientiert, so dass die Schicht in diesem Teil χ⁽²⁾-aktiv wird. Gleichzeitig wird die Probe mit UV-Licht bestrahlt, wodurch auch im Bereich 37 Vernetzung einsetzt und die dipolare Orientierung fixiert wird.

Als Bestrahlungsquellen sind Lampen geeignet, die im Bereich der Absorption des Photoinitiators emittieren. Dabei ist zu beachten, dass der spektrale Bereich der Chromophorabsorption ausgespart bleibt. Da übliche Initiatoren im Bereich zwischen 200 und 400 nm empfindlich sind, eignen sich Kaltlichtquellen, wie Hg-, D₂-, Xe-Lampen, ebenfalls Halogenlampen, sowie Lampen/Filter Kombinationen, ferner Lasersysteme wie Farbstofflaser, Excimerlaser, N₂-Laser, Nd:YAG 3. Harm.

Von besonderem Interesse ist gepulste Anregung. Da die Vernetzung nach Abschalten der Anregung weitergeht, kann die Photobelastung der Probe drastisch reduziert werden. Geeignete Lichtquellen sind Blitzlampen Xe, D₂, gepulste Laser N₂, Excimerlaser, Nd:YAG 3. Harm.

Zur Herstellung der erfindungsgemässen Schichten eignet sich eine Vielzahl von bekannten Polymeren mit photovernetzbaren Seitenketten. Als Beispiel werden mit Vorteil folgende typischen Substanzen verwendet.

Ein amorphes nlo-Polymer mit photovernetzbaren Seitenketten hat die folgende Strukturformel:

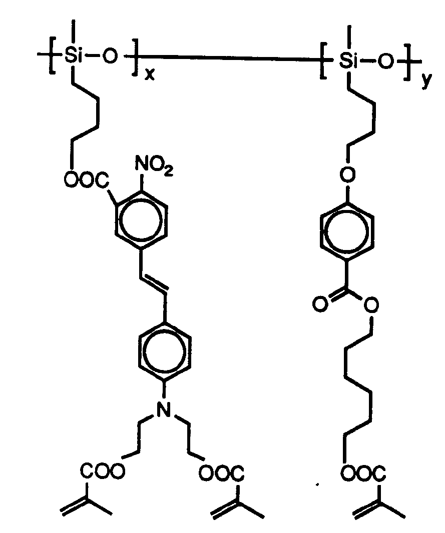

Ein flüssigkristallines Polymer mit photovernetzbaren Seitenketten hat folgende Strukturformel

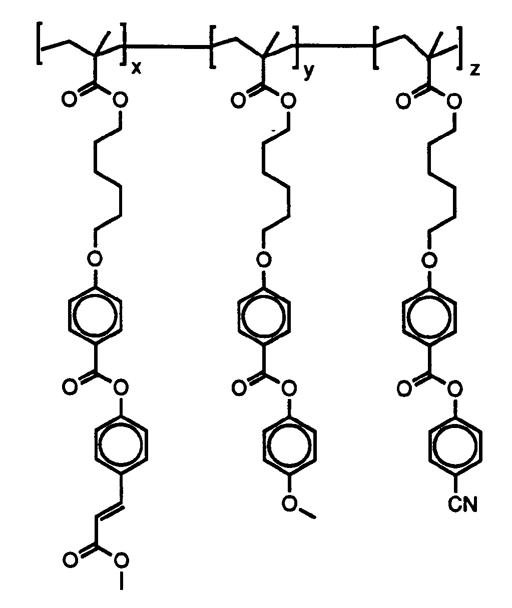

Handelsübliche Initiatoren sind z.B. Phenonderivate Darocur, Irgacure, Isopropylthioxantone / H Donor Kombinationen (N-Methyldiethanolamine). Die Absorption des Initiators muss ausserhalb der Chromophorabsorption liegen. Bei der Auswahl des Initiators ist daraufzu achten, dass der nlo Chromophor nicht als Triplettquencher des angeregten Initiators wirkt und damit die Bildung der Radikale verhindert.

## Patentansprüche

1. Polymerschicht (1) mit optisch nichtlinearen oder anisotropen Eigenschaften in selektiv flächig begrenzten und beliebig geformten Bereichen (8), die gegenüber anderen Bereichen der Schicht mit zentrosymmetrischer oder isotroper Struktur oder mit anderen optisch nichtlinearen oder anisotropen Eigenschaften abgegrenzt sind, dadurch gekennzeichnet, dass die Polymerschicht optisch nichtlineare und/oder mesogene Seitenketten aufweist, die flächenselektiv durch Lichteinwirkung vernetzt sind, wobei die Seitenketten in den Bereichen mit optisch nichtlinearen oder anisotropen Eigenschaften während der Vernetzung unter dem Einfluss einer oder mehrerer der Orientierungskräfte eines elektrischen Feldes, eines magnetischen Feldes, Wandorientierungskräfte oder Scherkräfte orientiert sind.

2. Polymerschicht nach Anspruch 1, dadurch gekennzeichnet, dass der Uebergang zwischen den optisch unterschiedlichen Bereichen auf weniger als 10 µm, vorzugsweise auf weniger als 1 µm begrenzt ist.

3. Polymerschicht nach einem der Ansprüche 1-2, dadurch gekennzeichnet, dass die definierten Bereiche ein Muster bilden.

4. Polymerschicht nach einem der Ansprüche 1-3, dadurch gekennzeichnet, dass die definierten Bereiche aus einem vernetzten Polymer bestehen.

5. Polymerschicht nach einem der Ansprüche 1-4, dadurch gekennzeichnet, dass die Flächen mit zentrosymmetrischer Struktur unvernetzt sind.

6. Polymerschicht nach einem der Ansprüche 1-5, dadurch gekennzeichnet, dass das Polymer ein flüssigkristallines Seitenkettenpolymer ist.

7. Polymerschicht nach einem der vorangehenden Ansprüche, dadurch gekennzeichnet, dass die photoinitiierte Vernetzung der Seitenketten in einer vernetzenden radikalischen Polymerisation von Methacrylaten oder Acrylaten besteht.

8. Polymerschicht nach einem der Ansprüche 1-6, dadurch gekennzeichnet, dass die photoinitiierte Vernetzung der Seitenketten in einer 2+2-Zykloaddition von Zimtsäurederivaten besteht.

9. Polymerschicht nach einem der Ansprüche 1-8, dadurch gekennzeichnet, dass von Homopolymeren, Oligomeren oder Monomeren ausgegangen wird.

10. Verfahren zur Herstellung einer Schicht mit optisch nichtlinearen oder anisotropen Eigenschaften nach einem der Ansprüche 1-9, gekennzeichnet durch Aufbringen einer Schicht aus einem Polymermaterial mit photovernetzbaren optisch nichtlinearen und/oder mesogenen Seitenketten auf einem Träger, Anlegen eines elektrischen Feldes und Bestrahlung der Schicht mit Licht der die Vernetzung bewirkenden Wellenlänge.

11. Verfahren nach Anspruch 10, dadurch gekennzeichnet, dass zur zweidimensionalen Strukturierung der Schicht, die Bestrahlung auf Teilbereiche der Schicht beschränkt wird.

12. Verfahren nach Anspruch 10, dadurch gekennzeichnet, dass die Schicht zu Beginn der Bestrahlung gekühlt wird.

13. Verfahren nach Anspruch 12, dadurch gekennzeichnet, dass während der Bestrahlung die Temperatur kontinuierlich erhöht wird.

14. Verfahren nach einem der Ansprüche 10-13, dadurch gekennzeichnet, dass von Homopolymeren, Oligomeren oder Monomeren ausgegangen wird.

## Claims

1. A polymeric layer (1) having optically non-linear or anisotropic properties in selected surface areas (8) of arbitrary shape, such areas being defined relative to other regions of the layer having centro-symmetrical or isotropic structure or having different optically non-linear or anisotropic properties, characterized in that the polymeric layer has optically non-linear and/or mesogenic side chains and selective surface areas of the layer being cross-linked by the action of light, the side chains in the areas having optically non-linear or anisotropic properties being orientated during cross-linking under the influence of one or more of the orientating forces of an electric field, a magnetic field, wall-orientation forces or shearing forces.

2. A polymeric layer according to claim 1, characterized in that the transition between the optically different areas is limited to less than 10 µm, preferably to less than 1 µm.

3. A polymeric layer according to any one of claims 1-2, characterized in that the defined areas form a pattern.

4. A polymeric coating according to any one of claims 1-3, characterized in that the defined areas consist of a crosslinked polymer.

5. A polymeric coating according to any one of claims 1-4, characterized in that the surfaces having a centrosymmetrical structure are non-cross-linked.

6. A polymeric layer according to any one of claims 1-5, characterized in that the polymer is a liquid crystalline side-chain polymer.

7. A polymeric layer according to any one of the preceding claims, characterized in that the photoinitiated cross-linking of the side chains consists in a cross-linking radical polymerisation of methacrylates or acrylates.

8. A polymeric layer according to any one of claims 1-6, characterized in that the photoinitiated cross-linking of the side chains consists in a 2 + 2 cycloaddition of cinnamic acid derivatives.

9. A polymeric layer according to any one of claims 1-8, characterized in that homopolymers, oligomers or monomers are used as starting material.

10. A process for the production of a layer having optically non-linear or anisotropic properties in accordance with any one of claims 1-9, characterized by the application of a layer of a polymeric material having photo-cross-linkable optically non-linear and/or mesogenic side chains to a support, application of an electric field and irradiation of a layer with light of a wavelength which causes cross-linking.

11. A process according to claim 10, characterized in that for two-dimensional structuring of the coating the irradiation is restricted to partial areas of the layer.

12. A process according to claim 10, characterized in that the layer is cooled at the beginning of irradiation.

13. A process according to claim 12, characterized in that the temperature in continuously increased during irradiation.

14. A process according to any one of claims 10-13, characterized in that homopolymers, oligomers or monomers are used as starting material.

## Revendications

1. Couche polymère (1), présentant des propriétés optiquement non linéaires ou anisotropes, dans des zones (8), de forme quelconque et présentant une délimitation bidimensionnelle sélective, qui sont délimitées par rapport à d'autres zones de la couche, présentant une structure centrosymétrique ou isotrope, ou présentant d'autres propriétés optiquement non linéaires ou anisotropes, caractérisée en ce que la couche polymère comporte des chaînes latérales optiquement non linéaires et/ou mésogènes, qui présentent une réticulation à sélectivité bidimensionnelle sous l'effet de la lumière, les chaînes latérales se trouvant dans les zones présentant des propriétés optiquement non linéaires ou anisotropes étant, pendant la réticulation, orientées sous l'influence de l'une ou de plusieurs des forces d'orientation d'un champ électrique, d'un champ magnétique, des forces d'orientation de paroi ou des forces de cisaillement.

2. Couche polymère selon la revendication 1, caractérisée en ce que la transition entre les zones optiquement différentes est limitée à moins de 10 µm, de préférence à moins de 1 µm.

3. Couche polymère selon l'une des revendications 1-2, caractérisée en ce que les zones définies forment un modèle.

4. Couche polymère selon l'une des revendications 1-3, caractérisée en ce que les couches définies sont constituées d'un polymère réticulé.

5. Couche polymère selon l'une des revendications 1-4, caractérisée en ce que les surfaces à structure centrosymétrique sont non réticulées.

6. Couche polymère selon l'une des revendications 1-5, caractérisée en ce que le polymère est un polymère à chaînes latérales mésomorphe.

7. Couche polymère selon l'une des revendications précédentes, caractérisée en ce que la réticulation photoamorcée des chaînes latérales a lieu lors d'une polymérisation radicalaire, avec réticulation, de méthacrylates ou d'acrylates.

8. Couche polymère selon l'une des revendications 1-6, caractérisée en ce que la réticulation photoamorcée des chaînes latérales s'effectue dans le cadre d'une cycloaddition 2+2 de dérivés de l'acide cinnamique.

9. Couche polymère selon l'une des revendications 1-8, caractérisée en ce qu'on part d'homopolymères, d'oligomères ou de monomères.

10. Procédé pour fabriquer une couche présentant des propriétés optiquement non linéaires ou anisotropes selon l'une des revendications 1-9, caractérisé par l'application d'une couche en un matériau polymère comportant des chaînes latérales photoréticulables, optiquement non linéaires et/ou mésogènes, sur un support, l'application d'un champ électrique et l'exposition de la couche à une lumière ayant la longueur d'onde provoquant la réticulation.

11. Procédé selon la revendication 10, caractérisé en ce que, pour assurer une structuration bidimensionnelle de la couche, l'exposition est limitée à des zones partielles de la couche.

12. Procédé selon la revendication 10, caractérisé en ce que la couche est refroidie au début de l'exposition.

13. Procédé selon la revendication 12, caractérisé en ce qu'on élève la température en continu pendant l'exposition.

14. Procédé selon l'une des revendications 10 à 13, caractérisé en ce qu'on part d'homopolymère, d'oligomères ou de monomères.
